# FASCICULE DE BREVET EUROPEEN

(11) **EP 1 558 896 B1**
(45) Date de publication et mention de la délivrance du brevet: **22.06.2011**
(21) Numéro de dépôt: 03810459.2
(22) Date de dépôt: 03.11.2003
(51) Int. Cl.: G01C 19/56

(54) **CAPTEUR GYROMETRIQUE MICRO-USINE, A DETECTION DANS LE PLAN DE LA PLAQUE USINEE**
MIKROBEARBEITETER KREISELRATENSENSOR MIT DETEKTION IN DER BEARBEITETEN PLATTENEBENE
MICRO-MACHINED GYRO RATE SENSOR WITH DETECTION IN THE MACHINED PLATE PLANE

(30) Priorité: 05.11.2002 FR 0213835
(43) Date de publication de la demande: 03.08.2005
(73) Titulaire: Thales, 92526 Neuilly Sur Seine (FR)
(72) Inventeur: NICU, Liviu, Thales Intellectual Property, F-94117 Arcueil (FR); ROUGEOT, Claude, Thales Intellectual Property, F-94117 Arcueil (FR); INGLESE, Jérôme, Thales Intellectual Property, F-94117 Arcueil (FR); LEVERRIER, Bernard, Thales Intellectual Property, F-94117 Arcueil (FR)
(74) Mandataire: Guérin, Michel
(86) Numéro de dépôt international: PCT/EP2003/050785
(87) Numéro de publication internationale: WO 2004/042324

(56) Documents cités:
- WO-A-02/066929
- DE-A- 4 428 405
- US-A- 5 604 312
- US-A- 5 728 936
- US-A- 6 009 751

## Description

L'invention concerne un microgyromètre, c'est-à-dire un capteur micromécanique inertiel dédié à la mesure de vitesses angulaires, réalisé par des techniques de micro-usinage.

Le micro-usinage de capteurs s'inspire des techniques de réalisation de circuits intégrés : il consiste à réaliser collectivement sur une seule plaque mince (en principe en silicium) plusieurs dizaines ou centaines de capteurs identiques, par des techniques de dépôt, dopage et photogravure qui définissent non seulement les parties électriques du capteur mais aussi les motifs géométriques de découpe qui donnent au capteur ses propriétés mécaniques.

Les techniques de gravure sont bien maîtrisées, et la fabrication collective réduit considérablement les coûts. La robustesse des dispositifs est excellente, et la petite taille des structures est très avantageuse.

Pour réaliser un microgyromètre, on constitue dans une plaque de silicium une masse vibrante suspendue et une structure d'excitation électrique pour mettre cette masse en vibration dans une direction déterminée. Lorsqu'on fait tourner le gyromètre autour d'un axe dit axe sensible du gyromètre, perpendiculaire à cette direction de vibration, une force de Coriolis est engendrée sur la masse. Cette force de Coriolis, qui est une composition vectorielle du mouvement de vibration et du mouvement de rotation, produit une vibration de la masse dans un sens perpendiculaire à la fois à la vibration d'excitation et à l'axe de rotation. Cette vibration naturelle résultante est détectée par une structure de détection, elle-même réalisée par micro-usinage.

Des structures à deux masses vibrantes couplées mécaniquement à la manière d'un diapason ont déjà été réalisées (voir p. ex. US-A-5 728 936, US-A-5 604 312 et WO-A-02/066 929). Les deux masses sont coplanaires, usinées dans la même plaque de silicium.

En général, l'axe sensible de ces gyromètres est situé dans le plan de la plaque de silicium et la structure de détection détecte un mouvement perpendiculaire au plan des masses à l'aide d'électrodes placées au-dessus de chaque masse mobile. Les signaux électriques qui résultent de cette détection servent à déterminer une valeur de vitesse angulaire de rotation du gyromètre autour de son axe sensible.

Toutefois, la réalisation de structures de détection de mouvements perpendiculaires au plan des masses mobiles oblige en général à prévoir que le gyromètre comprend plusieurs plaques usinées, que l'on vient rapporter les unes sur les autres ; l'une des plaques comporte la structure vibrante micro-usinée proprement dite avec ses masses mobile, ses bras de liaison et une structure d'excitation de la vibration ; au moins une autre plaque comporte des électrodes de détection de la vibration engendrée par la force de Coriolis. La fabrication de l'ensemble à plusieurs plaques est coûteuse.

C'est pourquoi on a également cherché à réaliser des structures technologiquement plus simples, usinées dans une seule plaque de silicium, et dans lesquelles un mouvement d'excitation de la masse mobile est engendré dans une direction Ox du plan alors qu'un mouvement résultant de la force de Coriolis est détecté dans une direction Oy du même plan, perpendiculaire à Ox. L'axe sensible du microgyromètre est dans ce cas un axe Oz perpendiculaire au plan de la plaque de silicium. La structure d'excitation et la structure de détection sont des peignes capacitifs interdigités réalisés au cours de l'usinage de la plaquette de silicium. Toutes les structures électriques sont réalisées sur la même plaque que la structure mécanique vibrante. La fabrication est de ce fait beaucoup moins coûteuse.

Mais dans ce type de gyromètre, il est nécessaire de bien séparer le mouvement d'excitation selon l'axe Ox et le mouvement de détection selon l'axe Oy : il faut en effet que la structure de détection détecte principalement le mouvement selon Oy qui résulte de la force de Coriolis, sans que la mesure soit polluée par une détection parasite du mouvement d'excitation selon Ox.

Un but de l'invention est de proposer une structure de microgyromètre qui permette une mesure de rotation avec une très bonne sensibilité, une très bonne linéarité, et des perturbations minimes dues au mouvement d'excitation ou à d'autres effets. Un autre but est de proposer une structure de microgyromètre qui peut recevoir, outre les structures électriques de mise en vibration et de détection de mouvement, des structures électriques auxiliaires de réglage de fréquence, et de compensation de biais (mesure de vitesse angulaire non égale à zéro lorsque la vitesse angulaire est égale à zéro) dus à des défauts intrinsèques ou à la dispersion de caractéristiques lors de la fabrication en série.

Selon l'invention, on propose un gyromètre à structure vibrante réalisé par micro-usinage d'une plaque mince plane, ce gyromètre comportant deux ensembles mobiles symétriques couplés par une structure de couplage reliant ces deux ensembles pour permettre un transfert d'énergie mécanique de vibration entre eux, ce gyromètre étant caractérisé par le fait que chacun des deux ensembles mobiles symétriques comporte deux éléments mobiles, un premier élément mobile inertiel étant relié à la structure de couplage et pouvant vibrer selon deux degrés de liberté dans des directions orthogonales Ox et Oy du plan de la plaque, et un deuxième élément mobile étant relié d'une part au premier élément et d'autre part à des zones d'ancrage fixe, par des moyens de liaison qui permettent la transmission au deuxième élément du mouvement de vibration du premier élément selon la direction Oy sans autoriser un mouvement de ce deuxième élément selon la direction Ox, une structure d'excitation étant associée au premier élément inertiel mobile pour exciter une vibration de cet élément selon Ox, et une structure de détection de mouvement étant associée au deuxième élément mobile pour détecter une vibration du deuxième élément selon Oy, le premier élément mobile étant un cadre intermédiaire rectangulaire entourant le deuxième élément mobile désigné par l'appellation masse mobile, et la structure de couplage comportant deux cadres extérieurs dont chacun entoure le cadre intermédiaire d'un ensemble mobile respectif.

En d'autres mots, le premier élément mobile est excité en mouvement selon Ox mais n'entraîne pas le deuxième élément dans ce mouvement. Le premier élément subit la force de Coriolis selon Oy (en présence d'une rotation du microgyromètre selon un axe sensible Oz perpendiculaire à Ox et Oy) et il entraîne le deuxième élément dans ce mouvement grâce aux moyens de liaison entre ces deux éléments. La structure de couplage permet de transférer l'énergie de vibration d'une des structures symétriques vers l'autre et réciproquement, tant pour le mouvement vibratoire selon Ox que pour le mouvement vibratoire selon Oy puisque la structure de couplage est reliée à celui des deux éléments mobiles qui vibre à la fois selon Ox et selon Oy.

Dans ce qui suit on désignera donc la structure de couplage par "cadre extérieur", le premier élément mobile par "cadre intermédiaire" ou " cadre intermédiaire inertiel", et le deuxième élément mobile par "masse mobile", cette masse étant entourée par le cadre intermédiaire inertiel.

Le gyromètre selon l'invention, réalisé par micro-usinage d'une plaque mince plane (de préférence en silicium), comporte donc de préférence, dans le plan de la plaque, des éléments mobiles et des zones d'ancrage, les éléments mobiles comprenant deux masses mobiles planes, un cadre intermédiaire mobile plan autour de chaque masse, et une structure de couplage reliant les deux cadres intermédiaires mobiles pour permettre un transfert d'énergie mécanique entre les deux cadres intermédiaires, une structure d'excitation associée à chaque cadre intermédiaire mobile pour exciter une vibration du cadre dans une direction Ox dans le plan de la plaque, et une structure de détection associée à chaque masse mobile, pour détecter un mouvement de la masse dans une direction Oy perpendiculaire à Ox et dans le plan de la plaque ; la masse est reliée au cadre intermédiaire qui l'entoure par l'intermédiaire d'au moins deux (de préférence quatre) premiers bras de flexion étroits et allongés qui présentent une grande raideur (résistance à l'allongement) dans la direction Oy et une faible raideur (résistance à la flexion) dans la direction Ox (en pratique ils s'étendent principalement dans la direction Oy et ne peuvent pas s'allonger dans cette direction tandis qu'ils peuvent fléchir dans la direction Ox) ; la masse est par ailleurs reliée à une zone d'ancrage par l'intermédiaire d'au moins deux (de préférence quatre) seconds bras de flexion étroits et allongés qui présentent une grande raideur (résistance à l'allongement) dans la direction Ox et une faible raideur (résistance à la flexion) dans la direction Oy (en pratique ils s'étendent principalement dans la direction Ox et ne peuvent s'allonger dans cette direction tandis qu'ils peuvent fléchir dans la direction Oy).

Pour obtenir à la fois une grande raideur ou résistance à l'allongement dans une direction et une faible raideur dans la direction perpendiculaire dans le même plan, il suffit que les bras aient une longueur globale d'au moins 5 fois leur largeur. Il s'agit là de raideurs relatives, la raideur absolue dépendant bien entendu des dimensions absolues des bras.

De préférence, chaque premier bras de flexion est replié en U, et présente deux parties allongées s'étendant dans la direction Oy, ces deux parties étant reliées par un élément de liaison court. Dans ce cas, il est souhaitable de relier l'élément de liaison court d'un des premiers bras à l'élément de liaison semblable d'un autre premier bras de flexion, par une traverse allongée dans la direction Ox, cette traverse empêchant que des efforts dissymétriques ne s'exercent sur ces deux premiers bras de flexion.

Les structures d'excitation des cadres mobiles et les structures de détection du mouvement de la masse mobile sont de préférence des peignes capacitifs à électrodes interdigitées ; la partie fixe d'un peigne est fixée à une zone d'ancrage formant également accès électrique pour la transmission de signaux électriques à cette partie fixe ou depuis cette partie fixe ; la partie mobile est fixée à un élément mobile, cadre intermédiaire pour la structure d'excitation ou masse mobile pour la structure de détection ; la ou les zone(s) d'ancrage de la masse mobile forment un accès électrique à la partie mobile du peigne, à travers l'ensemble de la structure vibrante.

Une structure supplémentaire à peignes interdigités peut être prévue sur la masse mobile pour ajuster, par application d'une tension continue réglable entre les électrodes en vis-à-vis du peigne, la raideur apparente des seconds bras de flexion dans la direction Oy, en vue de contrôler la fréquence de résonance naturelle de la structure. L'ajustement de la raideur apparente se fait par introduction d'une raideur électrostatique négative qui vient s'ajouter à la raideur naturelle (positive) des bras de flexion.

Une autre structure à peignes interdigités peut être prévue pour exercer un couple de torsion de la masse mobile, autour d'un axe parallèle à Oz. Cette structure comporte de préférence au moins deux peignes pour exercer un couple de torsion de sens et de valeur contrôlés. Elle sert à compenser le biais en quadrature de phase qu'on rencontre lorsque des défauts de symétrie de la structure vibrante sont engendrés lors d'une fabrication imparfaite du microgyromètre. On reviendra plus loin sur ce point.

D'autres caractéristiques et avantages de l'invention apparaîtront à la lecture de la description détaillée qui suit et qui est faite en référence aux dessins annexés dans lesquels :
- la figure 1 représente en vue de dessus la structure générale du gyromètre micro-usiné selon l'invention ;
- la figure 2 représente une variante de structure comportant en outre un moyen d'ajustement de fréquence de vibration de la masse mobile par action sur la raideur des bras de flexion ;
- la figure 3 représente une autre variante de structure comportant en outre un moyen de compensation de biais en quadrature de phase par ajout d'une précontrainte en torsion dans un sens tendant à réduire !e biais.

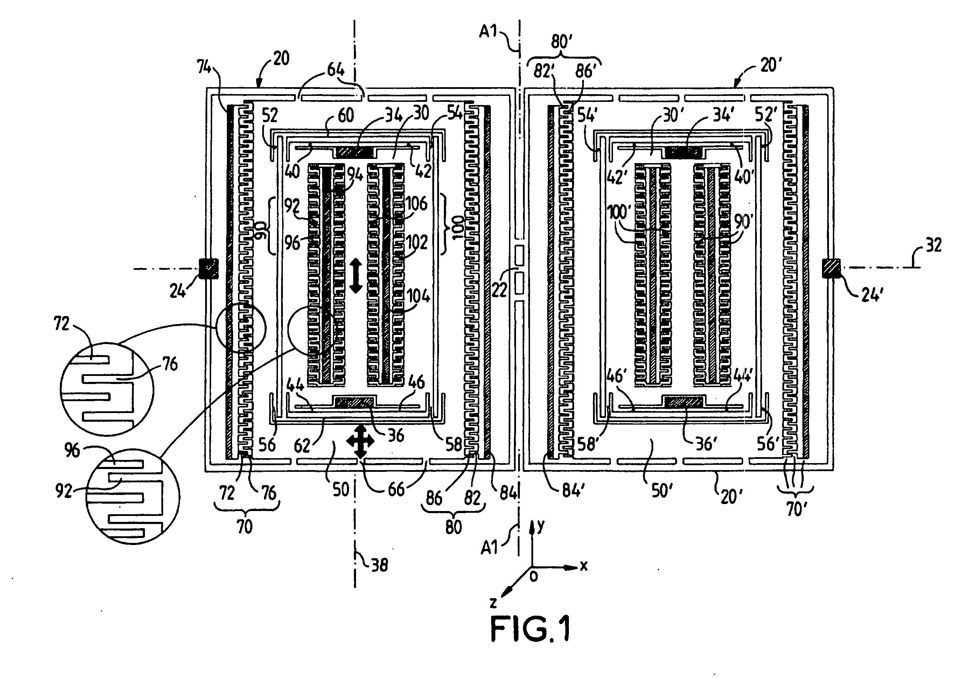

La figure 1 représente la plaque mince plane de silicium usinée selon l'invention pour faire un gyromètre dont l'axe sensible est perpendiculaire au plan de la plaque (qui est le plan de la figure).

Le silicium est choisi comme matériau préférentiel, d'une part pour ses propriétés mécaniques et d'autre part pour sa conductivité élevée lorsqu'il est suffisamment dopé par une impureté appropriée (du bore en général pour du silicium de type P). Le silicium conducteur permet de réaliser les fonctions électriques du gyromètre et notamment les fonctions d'excitation et les fonctions de détection ; ces fonctions sont réalisées par des peignes capacitifs interdigités alimentés en courant ou en tension électrique ; les doigts de ces peignes, directement usinés dans le silicium conducteur, servent d'armatures de condensateurs utiles aux fonctions d'excitation et aux fonctions de détection.

L'épaisseur de la plaque de silicium d'origine est de quelques centaines de micromètres ; la plaque comporte d'une part des zones d'ancrage fixes formée dans cette épaisseur et d'autre part la structure vibrante proprement dite, libre par rapport aux zones d'ancrage et formée sur une épaisseur plus faible, par exemple sur une épaisseur d'une soixantaine de micromètres, isolée du reste de l'épaisseur de la plaque par un intervalle étroit. Sur cette épaisseur d'une soixantaine de micromètres, la plaque de silicium est découpée par micro-usinage selon les motifs de masse mobile, cadre mobile, structure de couplage, bras de flexion, et peignes interdigités désirés.

L'usinage de la structure peut être réalisé en utilisant comme substrat d'origine un substrat de silicium sur isolant, mais d'autres méthodes sont également possibles. Un substrat en silicium sur isolant est constitué d'un substrat de silicium de quelques centaines de micromètres d'épaisseur qui porte sur sa face avant une fine couche d'oxyde de silicium elle-même recouverte d'une couche de silicium monocristallin de quelques dizaines de micromètres d'épaisseur. L'usinage consiste à attaquer le silicium du substrat par sa face avant, selon les motifs de surface désirés, au moyen de techniques de photogravure en usage en microélectronique, jusqu'à atteindre la couche d'oxyde, avec un produit de gravure sélectif qui attaque le silicium sans attaquer significativement l'oxyde. On arrête la gravure lorsque la couche d'oxyde est mise à nu. Cette couche d'oxyde est ensuite enlevée par attaque sélective avec un autre produit de manière à ne conserver que la couche superficielle de silicium monocristallin, sauf à l'endroit des zones d'ancrage où la couche d'oxyde subsiste et forme une liaison solidaire entre le substrat et la couche superficielle de silicium monocristallin. L'usinage par la face avant définit les différents découpages des parties mobiles. Ce sont donc ces motifs de surface, zones d'ancrage et découpages des parties mobiles, que l'on voit sur les figures.

La structure générale du gyromètre est une structure de type diapason, c'est-à-dire une structure symétrique comportant deux ensembles inertiels mobiles vibrant en opposition de phase, ces ensembles mobiles étant reliés entre eux par une structure de couplage servant à transmettre sans pertes, d'un ensemble à l'autre, les énergies mécaniques de vibration des deux ensembles pour mettre en opposition de phase ces vibrations. La symétrie de la structure est une symétrie par rapport à un axe A1, avec un ensemble mobile de chaque côté de cet axe.

La structure de couplage est constituée par deux cadres extérieurs rectangulaires 20 et 20' à l'intérieur desquels sont situés les ensembles inertiels mobiles. Les cadres 20 et 20' sont reliés entre eux par une courte barre de liaison 22 pouvant être considérée comme rigide. La barre de liaison 22 relie le milieu d'un côté du premier cadre au milieu d'un côté adjacent du deuxième cadre. Elle constitue un centre de symétrie de toute la structure ; elle est perpendiculaire à l'axe A1 et centrée sur cet axe. La barre de liaison courte 22 peut être renforcée par deux autres barres de liaison courtes situées de part et d'autre de la barre 22 et également centrées sur l'axe A1. Ces barres courtes, plus ou moins éloignées de la barre 22, permettent un certain ajustement de l'écart entre les fréquences utiles d'excitation et de détection du microgyromètre (la fréquence de détection étant de préférence légèrement différente de la fréquence d'excitation et la différence de fréquences représentant la bande passante du gyromètre).

Les cadres extérieurs 20 et 20' de la structure de couplage entourent les deux ensembles mobiles en principe par au moins trois côtés et ils sont reliés à ces deux ensembles de préférence le long de côtés perpendiculaires à l'axe de symétrie générale A1. Les cadres 20 et 20' peuvent (facultativement) être fixés chacun à une zone d'ancrage 24, 24' située au milieu d'un côté opposé au côté relié à la barre de liaison 22. Dans ce cas, les cadres 20 et 20' entourent complètement chacun un ensemble mobile inertiel respectif. La barre de liaison centrale 22 et les autres côtés des cadres 20 et 20' ne sont pas reliés à des zones d'ancrage fixes.

Les peignes interdigités servant à la mise en vibration des ensembles inertiels et à la détection du mouvement résultant de la force de Coriolis sont disposés eux aussi à l'intérieur de chacun des cadres extérieurs 20 et 20'. Dans ce qui suit on va décrire seulement les éléments situés à l'intérieur du cadre 20, la structure étant rigoureusement identique pour l'autre cadre 20' ; les éléments intérieurs au cadre 20' sont désignés par les mêmes références que celles du cadre 20 mais affectés du signe 'prime'.

Chaque ensemble inertiel comporte une masse inertielle mobile centrale 30 et un cadre inertiel intermédiaire 50 qui l'entoure et qui est donc situé entre la masse 30 et le cadre extérieur 20.

La masse mobile 30 ne peut se déplacer que selon une direction Oy (axe vertical dans le plan de la figure) ; le cadre intermédiaire 50 peut se déplacer selon l'axe Oy et selon un axe Ox perpendiculaire à Oy et également situé dans le plan de la figure. L'axe sensible du gyromètre est un axe Oz perpendiculaire au plan de la plaque. On excite une vibration du cadre intermédiaire inertiel dans la direction Ox ; lorsque le gyromètre tourne autour de son axe sensible Oz, une vibration du cadre intermédiaire est engendrée selon l'axe Oy. Cette vibration selon Oy est transmise à la masse 30, alors que la vibration selon Ox n'est pas transmise. Comme on le verra, une structure d'excitation de la vibration est associée au cadre intermédiaire 50, et une structure de détection de vibration est associée à la masse inertielle 30. La structure de couplage, constituée par les cadres 20, 20' et la barre 22 qui les relie, transmet l'énergie mécanique de vibration de l'ensemble inertiel mobile d'un côté à l'autre de l'axe A1 aussi bien pour les vibrations selon Ox que selon les vibrations selon Oy car cette structure de couplage est reliée directement aux cadres intermédiaires qui peuvent vibrer à la fois selon Ox et selon Oy.

La masse mobile 30 est reliée à des zones d'ancrage fixes par au moins deux bras de flexion conçus pour autoriser un déplacement de la masse selon Oy mais pour empêcher tout mouvement significatif de la masse dans la direction Ox. Ces bras sont de préférence situés de part et d'autre d'un axe de symétrie 32 de la masse, parallèle à Ox. Il y a alors deux zones d'ancrage 34 et 36 situées de part et d'autre de la masse mobile, symétriques par rapport à cet axe de symétrie 32. De plus, ces zones sont de préférence situées sur un autre axe de symétrie 38 de la masse, axe qui est parallèle à Oy. Les bras de flexion qui relient la masse 30 aux zones 34 et 36 sont des bras allongés dans la direction Ox, de manière à présenter une grande raideur (grande résistance à l'allongement) dans cette direction. Ils sont par ailleurs très étroits, comparativement à leur longueur, pour présenter une faible raideur dans la direction Oy perpendiculaire à Ox ; cette faible raideur autorise un déplacement de la masse selon Oy. Il y a de préférence quatre bras de flexion plutôt que deux, la masse étant reliée à la zone d'ancrage 34 par deux bras 40 et 42 dans le prolongement l'un de l'autre de part et d'autre de la zone 34 ; la masse est reliée par ailleurs à la deuxième zone d'ancrage 36 par deux bras 44 et 46 dans le prolongement l'un de l'autre de part et d'autre de la zone 36.

En pratique, comme on le voit sur la figure 1, pour gagner en encombrement dans la direction Oy sans réduire significativement la dimension de la masse dans cette direction, on effectue une découpe dans la masse autour de la zone d'ancrage ; pour maximiser la flexibilité des bras de flexion dans la direction Oy en augmentant le rapport entre la longueur et la largeur de ces bras, on relie chaque bras d'un côté à proximité d'un coin d'extrémité de la masse (la masse a une forme en principe généralement rectangulaire) et de l'autre à la zone d'ancrage située sur l'axe de symétrie 38. On notera qu'on pourrait aussi envisager de donner aux bras 40, 42, 44, 46 une forme repliée avec deux branches allongées dans la direction Oy, les bras étant alors attachés à la masse plus près de la zone d'ancrage centrale. On notera aussi que, plutôt qu'une zone d'ancrage centrale située au milieu d'un côté de la masse mobile, on pourrait avoir deux zones d'ancrage situées plutôt à proximité des coins d'extrémité de la masse de part et d'autre de l'axe 38.

Le cadre intermédiaire mobile 50 entoure complètement la masse 30. La masse 30 est reliée au cadre intermédiaire 50 par au moins deux bras de flexion qui ont pour particularité de présenter une très grande raideur (très grande résistance à l'allongement) dans la direction Oy et une faible raideur dans la direction Ox. Ces bras sont allongés dans la direction Oy et ont une largeur faible devant leur longueur, afin de présenter cette différence de raideurs.

Il y a de préférence quatre bras de flexion de ce type entre la masse 30 et le cadre intermédiaire 50, les bras étant situés en pratique chacun à un coin de la masse mobile si elle est de forme généralement rectangulaire. Ils sont disposés symétriquement d'une part par rapport à l'axe de symétrie 32 de la masse (axe parallèle à Ox) et d'autre part par rapport à l'axe de symétrie 38 (parallèle à Oy).

Ces bras sont désignés par les références 52, 54, 56, 58. Ils ont de préférence une forme repliée en U pour diviser par deux leur dimension longitudinale sans réduire significativement leur longueur utile donc sans diminuer significativement le rapport élevé entre leur raideur selon Oy et leur raideur selon Ox. Les deux branches repliées du U sont allongées parallèlement à Oy et sont reliées entre elles par un court élément de liaison. Les bras 52 à 58 pourraient cependant ne pas être repliés et s'étendre en totalité selon la direction Oy entre le cadre intermédiaire et la masse. Le repliement permet de gagner de la place sans modifier significativement les caractéristiques mécaniques désirées.

Si les bras sont repliés comme sur la figure 1, il est préférable de relier par ailleurs l'élément court de liaison (qui relie les deux branches du U) d'un premier bras 52 à l'élément court correspondant du bras 54 qui est symétrique du bras 52 par rapport à l'axe 38. Une traverse 60 est prévue à cet effet, parallèle à Ox, pour relier le fond du U du bras de liaison 52 au fond du U du bras de flexion 54, les bras 52 et 54 étant symétriques par rapport à l'axe 38. Une traverse similaire 62, symétrique de la traverse 60 par rapport à l'axe 32, relie les éléments symétriques 56 et 58. Ces traverses 60 et 62, parallèles à Ox, renforcent la symétrie de transmission d'un mouvement selon Oy imposé par le cadre intermédiaire mobile 50 à la masse 30. Elles ne sont pas présentes si les bras 52, 54, 56, 58 n'ont pas une forme repliée car dans ce cas les extrémités des bras 52 et 54 seraient déjà reliées rigidement par le cadre intermédiaire 50 lui-même.

Comme on le voit sur la figure 1, la forme repliée en U allongé des bras de flexion entre le cadre mobile 50 et la masse mobile 30 est obtenue par des découpes dans le cadre mobiles et dans la masse mobile, mais de manière générale, les bras de flexion partent à peu près d'un coin intérieur du cadre intermédiaire vers un coin en vis-à-vis de la masse même si le point de fixation effectif du bras sur le cadre ou sur la masse ne part pas exactement de ce coin. On peut considérer que la masse est suspendue globalement par ses quatre coins au cadre mobile.

Le cadre intermédiaire mobile 50, entouré par le cadre extérieur 20 de la structure de couplage, est relié à ce cadre extérieur par des bras de liaison courts 64 d'un côté, 66 de l'autre, les bras 64 étant symétriques des bras 66 par rapport à l'axe de symétrie 32. Les bras 64, de même que les bras 66, sont répartis le long d'un côté du cadre 50, ce côté étant parallèle à l'axe Ox. Ces bras courts constituent des liaisons pratiquement rigides à travers lesquelles l'énergie de vibration selon Ox et Oy du cadre intermédiaire 50 (et de la masse mobile 30) peut passer vers la structure de couplage et donc vers le deuxième cadre intermédiaire 50' et la deuxième masse mobile 30'. Dans l'exemple représenté, trois bras courts 64 sont répartis le long du côté du cadre intermédiaire 50 ; trois autres bras courts 66 sont répartis le long du côté opposé.

Il n'y a pas de bras de liaison entre le cadre intermédiaire et le cadre extérieur de couplage le long des côtés parallèles à l'axe Oy.

Le cadre intermédiaire 50 est excité en vibration selon Ox par une première structure en peigne interdigité 70 qui comporte un demi-peigne fixe 72, attaché à une zone d'ancrage 74 et un demi-peigne mobile 76 constitué le long d'un premier côté (parallèle à Oy) du cadre intermédiaire 50. Les dents ou doigts du demi-peigne fixe 72, en silicium conducteur usiné en même temps que les autres éléments du gyromètre, constituent la première armature d'une capacité et les dents ou doigts du demi-peigne mobile 76, également en silicium conducteur, constituent la deuxième armature de cette capacité. Classiquement, la structure en peigne agit comme excitateur du mouvement de la partie mobile grâce aux forces d'attraction qui s'exercent entre les doigts en regard lorsqu'une tension est appliquée entre les demi-peignes. La tension d'excitation est alternative pour engendrer un mouvement de vibration, et la fréquence de cette tension est choisie proche de la fréquence de résonance mécanique de la structure. La tension d'excitation est appliquée entre la zone d'ancrage 74 et l'une et/ou l'autre des zones d'ancrage 34 et 36. Le demi-peigne fixe 72 est en contact électrique direct (par le corps du silicium conducteur) avec la zone d'ancrage 74 ; le demi-peigne mobile 76 est en contact avec les zones d'ancrage 34 et 36 par l'intermédiaire des bras de flexion 52 à 58, du corps de la masse mobile, des bras de flexion 40 à 46, et du cadre intermédiaire 50, de sorte qu'en appliquant une tension entre la zone d'ancrage 74 et les zones d'ancrage 34 ou 36 on applique bien une tension entre la partie fixe et la partie mobile du peigne 70.

Le mouvement d'excitation engendré sur le cadre intermédiaire 50 est selon la direction Ox, les peignes agissant par modification de la surface en recouvrement mutuel des doigts intercalés.

Le microgyromètre comporte de préférence une autre structure à peignes interdigités associée au cadre intermédiaire, symétrique de la structure 70 par rapport à l'axe 38. Elle comporte un demi-peigne fixe 82 attaché à une zone d'ancrage 84, et un demi-peigne mobile 86 usiné le long d'un côté du cadre intermédiaire 50. Cette structure peut servir de détecteur du mouvement du cadre selon Ox. Elle est utile pour l'asservissement du mouvement excité par le peigne 70 ; l'asservissement est en général utile pour ajuster la fréquence d'excitation par rapport à la fréquence de résonance de la structure. Les tensions détectées par la structure 80 apparaissent entre la zone d'ancrage 84 et les zones d'ancrage 34 et 36 (ou encore la zone 24).

Au moins un peigne interdigité est associé à la masse mobile 30 pour détecter le mouvement de la masse mobile dans la direction Oy. L'orientation de ces peignes dépend du principe sur lequel repose la détection : si la détection repose sur une mesure des variations de surface en recouvrement mutuel des doigts des demi-peignes fixe et mobile, le peigne de détection des mouvements selon Oy est disposé perpendiculairement au peigne d'excitation 70 (qui repose aussi sur des variations de surface en recouvrement) . Mais si la détection repose sur une mesure des variations d'espacement entre les doigts du demi-peigne fixe et du demi-peigne mobile, le peigne de détection est disposé parallèlement au peigne d'excitation. La détection par la variation de l'espacement entre doigts est préférée car elle est plus sensible. L'interdigitation des peignes est alors dissymétrique au repos, les doigts d'un demi-peigne n'étant pas exactement au milieu de l'intervalle entre deux doigts de l'autre demi-peigne, alors qu'un peigne fonctionnant (comme le peigne d'excitation) sur la base de variations de surfaces en recouvrement a les doigts d'un demi-peigne au milieu de l'intervalle entre les doigts de l'autre demi-peigne.

C'est le cas sur la figure 1 : les peignes de détection sont disposés avec la même orientation générale que les peignes 70 et 80, bien qu'ils soient associés à un mouvement selon Oy alors que les peignes 70 et 80 sont associés à un mouvement (excitation ou détection) selon Ox.

Dans l'exemple de la figure 1, la masse mobile est associée à deux peignes interdigités identiques 90 et 100 disposés parallèlement à l'axe de symétrie 38 et de part et d'autre de cet axe. Ces peignes jouent tous les deux le même rôle de détecteur du mouvement de la masse selon Oy, et on pourrait en variante se contenter d'un seul peigne placé au centre de la masse le long de l'axe 38.

Le peigne 90 comporte un demi-peigne fixe 92 attaché à une zone d'ancrage 94 et un demi-peigne mobile 96 faisant partie de la masse mobile elle-même. La masse mobile comporte une découpe pour laisser la place au peigne fixe 92 et à la zone d'ancrage 94, et les bords de cette découpe sont découpés en forme de doigts pour constituer le demi-peigne mobile 96 dans lequel viennent s'intercaler les doigts du demi-peigne fixe. Dans l'exemple représenté, le peigne 90 est double, c'est-à-dire que deux côtés de la découpe de la masse 30 sont pourvus de doigts, et le demi-peigne fixe 92 comporte des doigts de part et d'autre de la zone d'ancrage 94.

La structure interdigitée 100 est rigoureusement symétrique de la structure 90 et est formée dans une autre découpe de la masse mobile 30. Elle comporte un demi-peigne fixe 102, une zone d'ancrage 104, et un demi-peigne mobile 106.

Pour la détection du mouvement selon Oy, un circuit électronique associé à cette structure détecte la modulation en fréquence des tensions électriques présentes entre la zone d'ancrage 94 et les zones d'ancrage 34 et 36, et/ou entre la zone 104 et les zones 34 et 36. Cette modulation n'est due qu'à un déplacement de la masse mobile selon l'axe Oy puisque la masse ne peut se déplacer que selon cet axe.

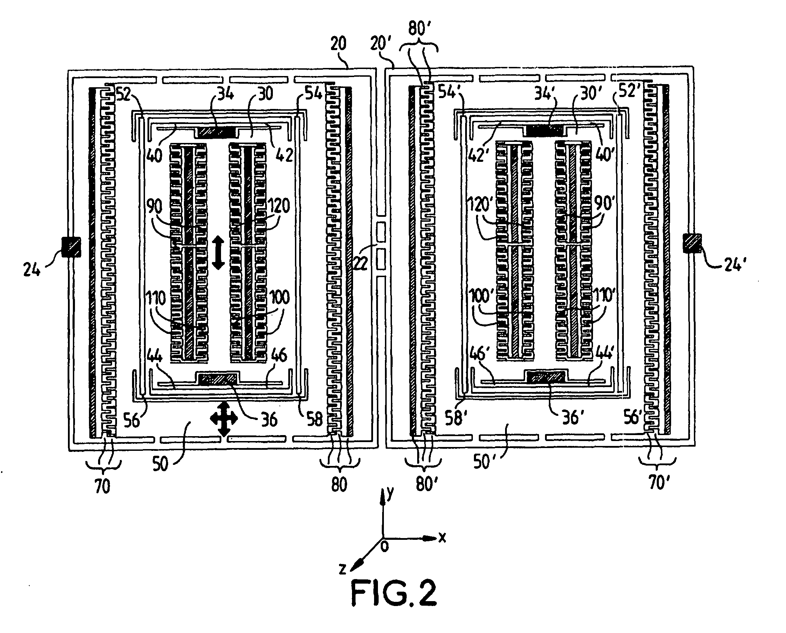

La figure 2 représente une amélioration de la figure 1. On a prévu au moins un peigne interdigité supplémentaire associé à la masse mobile. Ce peigne permet d'ajuster électriquement, par une simple commande en tension continue, la raideur apparente des bras de flexion 40, 42, 44, 46, cet ajustement de raideur ayant une conséquence directe sur l'ajustement de la fréquence de vibration naturelle selon Oy en présence d'une force de Coriolis. En effet, la résonance mécanique naturelle des ensembles mobiles dépend de la raideur des bras de flexion qui s'opposent au mouvement de vibration engendré. Un ajustement de raideur, donc de fréquence, permet de compenser les variations de fréquence de résonance qui pourraient résulter de non-uniformités ou de défauts de fabrication. Les écarts entre la fréquence réelle et la fréquence théorique prévue peuvent ainsi être compensés.

Avec un peigne alimenté en tension continue, et agissant sur la masse mobile 30 pour exercer un effort constant dans la direction Oy, on peut exercer une contrainte au repos sur les bras de flexion 40, 42, 44, 46. Cette contrainte tend à créer une raideur négative, d'origine électrostatique, dont la valeur absolue vient se soustraire à la raideur naturelle de ces bras dans la direction Oy.

Le peigne qui exerce cette contrainte est un peigne 110 orienté comme les autres peignes (direction générale selon Oy) et dans ce cas il agit par variation de l'espacement entre doigts des demi-peignes (peigne à doigts décalés). Un seul peigne central peut suffire, mais dans l'exemple représenté à la figure 2, on a prévu deux peignes symétriques (110 et 120) disposés latéralement de part et d'autre de l'axe 38 ; dans l'exemple représenté, ces peignes sont symétriques par rapport au centre de symétrie de la masse mobile et les peignes de détection 90 et 100 sont également symétriques par rapport à ce centre plutôt que par rapport à l'axe 38 mais la symétrie pourrait être par rapport à l'axe 38 tant pour les peignes 90 et 100 que pour les peignes 110 et 120. Le peigne d'ajustement de raideur 110 est situé dans le prolongement du peigne de détection 90. Il comporte un demi-peigne fixe, une zone d'ancrage autonome (pour une alimentation électrique autonome), et un demi-peigne mobile constitué encore par des doigts directement découpés dans la masse mobile. Le peigne 120 est identique au peigne 110.

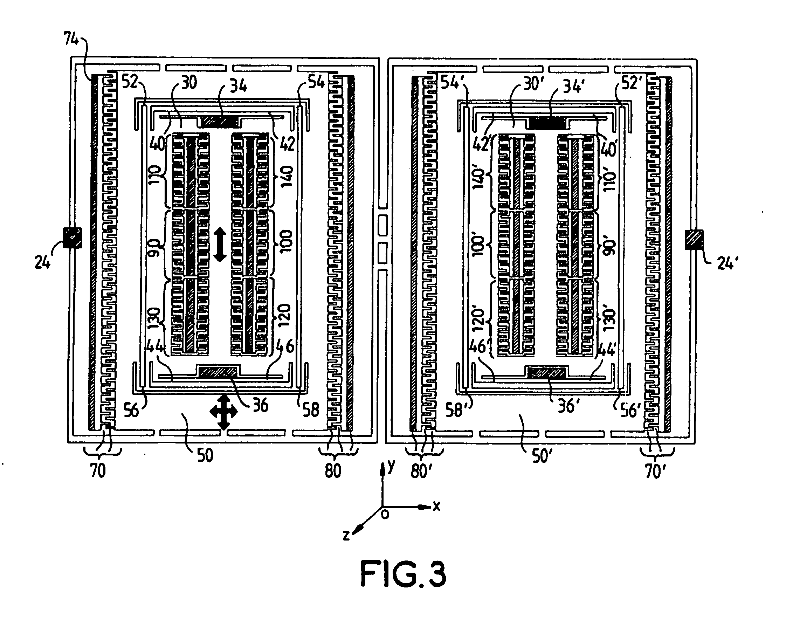

A la figure 3, on a prévu une amélioration supplémentaire avec d'autres peignes encore associés à la masse mobile. Ces peignes ont là encore été dessinés, à titre d'exemple seulement dans la prolongement des peignes 90 et 100 (qui sont alors plus courts que ceux de la figure 1 ou même que ceux de la figure 2). Les peignes supplémentaires sont destinés à exercer, grâce à une application de tensions continues appropriées sur chacun d'eux, un effort de torsion de la masse mobile autour de son centre de symétrie. Ceci a pour effet de modifier l'orientation du mouvement d'excitation par rapport au mouvement de détection, et de modifier par conséquent (dans un sens tendant à le compenser) le biais en quadrature du gyromètre.

Les biais du gyromètre sont les valeurs de signal non nulles mesurées alors que la vitesse angulaire de rotation du gyromètre est nulle. Le biais en quadrature résulte de mouvements selon un axe alors qu'un effort est en réalité exercé sur un axe perpendiculaire. Il résulte de défauts de rectangularité de sections de poutres ou d'autres facteurs de dissymétrie. Ce biais peut être compensé en partie en exerçant une certaine torsion de la masse mobile. Cette torsion est exercée par exemple grâce à une action sur deux peignes interdigités 130 et 140 situés diagonalement de part et d'autre d'un centre de symétrie de la masse mobile 30. Une tension continue est appliquée sur chaque peigne de manière à exercer un couple dans le sens qui convient à la compensation du biais. Le couple de torsion existe dès lors que les peignes exercent des forces appliquées en des points différents et dont les directions ne passent pas par le centre de symétrie de la masse.

Dans l'exemple représenté sur la figure 3, on a prévu deux peignes 130 et 140 pour exercer ce couple, en plus des peignes de détection 90 et 100 et des peignes d'ajustage de fréquence 110 et 120. Mais un seul peigne 130 suffirait, à condition que ce peigne exerce un effort dans une direction qui ne passe pas par le centre de symétrie de la masse mobile. On comprendra par ailleurs que les peignes 110 et 120, disposés en diagonale sur la masse mobile et exerçant des efforts dans des directions qui ne passent pas par le centre de symétrie de la masse, pourraient servir à la fois à ajuster la fréquence et à exercer la torsion de compensation de biais ; dans ce cas il n'y a pas besoin de peignes supplémentaires 130 et 140 ; en effet, les efforts exercés sur la masse par les peignes 110 et 120 sont dirigés l'un vers le haut de la figure et l'autre vers le bas de la figure (on suppose ici que les peignes sont à interdigitation dissymétrique et agissent sur l'espacement entre doigts plutôt que sur le recouvrement des doigts) ; en appliquant des tensions d'amplitude différentes sur les peignes 110 et 120 on crée à la fois un couple de torsion et un effort résultant vers le haut ou vers le bas, ce dernier créant la raideur négative souhaitée. Pour des raisons de symétrie et d'indépendance de la commande de raideur et de la commande de torsion, on préfère cependant une configuration telle que celle de la figure 3 avec des peignes 110 et 120 spécifiquement pour l'ajustement de raideur et des peignes 130 et 140 spécifiquement pour la compensation de biais en quadrature.

Dans ce qui précède on a prévu que les peignes 90 à 140 étaient placés dans des découpes de la masse mobile, mais on pourrait aussi envisager qu'ils soient disposés sur les bords de la masse mobile sans modifier les principes qui ont expliqués ci-dessus.

On a ainsi décrit un microgyromètre qui est facilement réalisable à partir d'une plaque de silicium dans le plan de laquelle on a usiné à la fois deux ensembles inertiels mobiles et une structure de couplage mécanique qui les entoure, et dans lequel on a réalisé chaque ensemble mobile sous forme de deux parties, masse mobile et cadre mobile, le cadre mobile étant relié à la structure de couplage par des liaisons rigides, la masse mobile étant reliée au cadre d'une part et à des points d'ancrage d'autre part par des bras de flexion qui autorisent un mouvement dans le plan selon un seul degré de liberté pour la masse mobile et selon deux degrés de liberté pour le cadre. Le couplage mécanique entre les deux ensembles mobiles se fait aussi bien pour les vibrations d'excitation que pour les vibrations orthogonales résultant de la force de Coriolis. Il ne se fait pas par l'intermédiaire de bras de flexion souples mais directement par des liaisons rigides entre le cadre mobile et la structure de couplage (contrairement à des structures dans lesquelles le couplage entre ensembles mobiles se ferait par l'intermédiaire de bras de flexion qui serviraient à la fois à assurer la souplesse de suspension des ensembles inertiels et le couplage entre les deux ensembles).

Le gyromètre selon l'invention peut présenter de très bons coefficients de qualité en excitation et en détection, ce qui permet d'augmenter la sensibilité du gyromètre dans le cas où on utilise une fréquence d'excitation et une fréquence de détection identiques.

## Revendications

1. Gyromètre à structure vibrante réalisé par micro-usinage d'une plaque mince plane, ce gyromètre comportant deux ensembles mobiles symétriques (30, 50 ; 30', 50') couplés par une structure de couplage (20, 20', 22) reliant ces deux ensembles pour permettre un transfert d'énergie mécanique de vibration entre eux, ce gyromètre étant **caractérisé par le fait que** chacun des deux ensembles mobiles symétriques comporte deux éléments mobiles (30, 50), un premier élément mobile inertiel (50) étant relié à la structure de couplage (20, 20', 22) et pouvant vibrer selon deux degrés de liberté dans des directions orthogonales Ox et Oy du plan de la plaque, et un deuxième élément mobile (30) étant relié d'une part au premier élément (50) et d'autre part à des zones d'ancrage fixe (34, 36), par des moyens de liaison (40-46 ; 52-58) qui permettent la transmission au deuxième élément du mouvement de vibration du premier élément selon la direction Oy sans autoriser un mouvement du deuxième élément selon la direction Ox, une structure d'excitation (70) étant associée au premier élément mobile (50) pour exciter une vibration du premier élément selon Ox, et une structure de détection de mouvement (90) étant associée au deuxième élément mobile (30) pour détecter une vibration du deuxième élément selon Oy, le premier élément mobile (50) étant un cadre intermédiaire rectangulaire entourant le deuxième élément mobile désigné par l'appellation masse mobile (30), et la structure de couplage comportant deux cadres extérieurs (20) dont chacun entoure le cadre intermédiaire d'un ensemble mobile respectif.

2. Gyromètre selon la revendication 1, **caractérisé en ce que** la masse mobile (30) est reliée au cadre intermédiaire (50) par l'intermédiaire d'au moins deux premiers bras de flexion (52-58) étroits et allongés qui présentent une grande résistance à l'allongement dans la direction Oy et une faible raideur dans la direction Ox, et la masse mobile est reliée à au moins une zone d'ancrage par l'intermédiaire d'au moins deux seconds bras de flexion étroits et allongés qui présentent une grande résistance à l'allongement dans la direction Ox et une faible raideur dans la direction Oy.

3. Gyromètre selon la revendication 2, **caractérisé en ce que** chaque premier bras de flexion est replié en U, et présente deux parties allongées s'étendant dans la direction Oy, ces deux parties étant reliées par un élément de liaison court.

4. Gyromètre selon la revendication 3, **caractérisé en ce que** l'élément de liaison court d'un des premiers bras (52) est relié à l'élément de liaison semblable d'un autre premier bras (54), par une traverse (60) allongée dans la direction Ox.

5. Gyromètre selon l'une des revendications 1 à 4, **caractérisé en ce que** la structure de couplage (20, 20', 22) est reliée au premier élément mobile de chaque ensemble par des liaisons rigides courtes (64, 66).

6. Gyromètre selon l'une des revendications 1 à 5, **caractérisé en ce que** la structure de couplage comprend, autour de chaque ensemble mobile, un cadre extérieur (20, 20') et une courte barre de liaison (22) entre les cadres extérieurs.

7. Gyromètre selon l'une des revendications 1 à 6, **caractérisé en ce que** la structure d'excitation du premier élément mobile est un peigne capacitif à électrodes interdigitées usiné dans la plaque mince plane.

8. Gyromètre selon l'une des revendications 1 à 7, **caractérisé en ce que** la structure de détection de mouvement du deuxième élément mobile est un peigne capacitif à électrodes interdigitées usiné dans la plaque mince plane.

9. Gyromètre selon l'une des revendications 1 à 6, **caractérisé en ce qu'**il comporte au moins un peigne interdigité (90) associé au deuxième élément mobile (30) de chaque ensemble, pour la détection du mouvement de celui-ci selon Oy, et au moins un peigne interdigité supplémentaire (110), électriquement séparé du premier, pour exercer sur le deuxième élément mobile, par l'application d'une tension réglable sur ce peigne supplémentaire, un effort ajustable permettant de modifier la fréquence de résonance naturelle de l'ensemble mobile

10. Gyromètre selon l'une des revendications 1 à 6, **caractérisé en ce qu'**il comporte au moins un peigne interdigité (90) associé au deuxième élément mobile (30) de chaque ensemble, pour la détection du mouvement de celui-ci selon Oy, et au moins un peigne interdigité supplémentaire (130, 140), associé au deuxième élément mobile (30) de chaque ensemble, pour exercer, par application d'une tension réglable sur ce peigne supplémentaire, un couple de torsion ajustable sur le deuxième élément mobile, autour d'un axe Oz perpendiculaire à Ox et Oy.

11. Gyromètre selon l'une des revendications 1 à 6, **caractérisé en ce qu'**il comporte au moins trois peignes interdigités associés au deuxième élément mobile, le premier (90, 100) pour la détection du mouvement du deuxième ensemble mobile selon Oy, le deuxième (110, 120) pour l'ajustement de la fréquence de détection, et le troisième (130, 140) pour exercer un couple de torsion ajustable sur le deuxième élément mobile.

## Claims

1. A gyroscope with a vibrating structure produced by micro-machining a thin flat wafer, said gyroscope comprising two symmetrical mobile assemblies (30, 50; 30', 50') coupled by a coupling structure (20, 20', 22) connecting said two assemblies to allow mechanical vibration energy to be transferred between them, said gyroscope being **characterised in that** each of the two symmetrical mobile assemblies comprises two mobile elements (30, 50), a first inertial mobile element (50) being connected to the coupling structure (20, 20', 22) and being able to vibrate along two degrees of freedom in orthogonal directions Ox and Oy of the plane of the wafer, and a second mobile element (30) being connected on the one hand to the first element (50) and on the other hand to fixed anchoring zones (34, 36) by connecting means (40-46; 52-58) which allow the transmission of the vibration movement of the first element along direction Oy to the second element, without permitting a movement of the second element along direction Ox, an excitation structure (70) being associated with the first mobile element (50) to excite a vibration of the first element along Ox, and a movement detection structure (90) being associated with the second mobile element (30) to detect a vibration of the second element along Oy, said first mobile element (50) being a rectangular intermediate frame surrounding the second mobile element, referred to as a mobile mass (30), and the coupling structure comprising two external frames (20) each of which surrounds the intermediate frame of a respective mobile assembly.

2. The gyroscope according to claim 1, **characterised in that** the mobile mass (30) is connected to the intermediate frame (50) by means of at least two first narrow and elongate flex arms (52-58) which have a high resistance to elongation in direction Oy and a low stiffness in direction Ox, and the mobile mass is connected to at least one anchoring zone by means of at least two second narrow and elongate flex arms which have a high resistance to elongation in direction Ox and a low stiffness in direction Oy.

3. The gyroscope according to claim 2, **characterised in that** each first flex arm is folded into a U shape and has two elongated portions which extend in direction Oy, said two portions being connected by a short connecting element.

4. The gyroscope according to claim 3, **characterised in that** the short connecting element of one of the first arms (52) is connected to a similar connecting element of another first arm (54) by a cross-member (60) elongated in direction Ox.

5. The gyroscope according to any one of claims 1 to 4, **characterised in that** the coupling structure (20, 20', 22) is connected to the first mobile element of each assembly by short rigid links (64, 66).

6. The gyroscope according to any one of claims 1 to 5, **characterised in that** the coupling structure comprises, around each mobile assembly, an exterior frame (20, 20') and a short connecting bar (22) between the exterior frames.

7. The gyroscope according to any one of claims 1 to 6, **characterised in that** the excitation structure of the first mobile element is a capacitive comb with interdigitated electrodes machined into the thin flat wafer.

8. The gyroscope according to any one of claims 1 to 7, **characterised in that** the movement detection structure of the second mobile element is a capacitive comb with interdigitated electrodes machined into the thin flat wafer.

9. The gyroscope according to any one of claims 1 to 6, **characterised in that** it comprises at least one interdigitated comb (90) associated with the second mobile element (30) of each assembly for the detection of movement of said assembly along Oy, and at least one additional interdigitated comb (110), electrically separated from the first, for exerting an adjustable force on the second mobile element by applying an adjustable voltage to said additional comb, which allows the natural resonance frequency of the mobile assembly to be modified.

10. The gyroscope according to any one of claims 1 to 6, **characterised in that** it comprises at least one interdigitated comb (90) associated with the second mobile element (30) of each assembly for the detection of movement of said assembly along Oy, and at least one additional interdigitated comb (130, 140) associated with the second mobile element (30) of each assembly for exerting an adjustable torsion torque by applying an adjustable voltage to said additional comb on the second mobile element around an axis Oz perpendicular to Ox and Oy.

11. The gyroscope according to any one of claims 1 to 6, **characterised in that** it comprises at least three interdigitated combs associated with the second mobile element, a first one (90, 100) for detecting movement of the second mobile assembly along Oy, a second one (110, 120) for adjusting the detection frequency, and a third one (130, 140) for exerting an adjustable torsion torque on the second mobile element.

## Patentansprüche

1. Gyroskop mit vibrierender Struktur, hergestellt durch Mikrobearbeiten eines dünnen, flachen Wafers, wobei das Gyroskop zwei symmetrische mobile Baugruppen (30, 50; 30', 50') umfasst, die durch eine Kopplungsstruktur (20, 20', 22) verbunden sind, die die beiden Baugruppen verbindet, so dass mechanische Vibrationsenergie dazwischen übertragen werden kann, wobei das Gyroskop **dadurch gekennzeichnet ist, dass** jede der beiden symmetrischen mobilen Baugruppen zwei mobile Elemente (30, 50) umfasst, wobei ein erstes mobiles Trägheitselement (50) mit der Kopplungsstruktur (20, 20', 22) verbunden ist und entlang zwei Freiheitsgraden in orthogonalen Richtungen Ox und Oy der Ebene des Wafers vibrieren kann, und ein zweites mobiles Element (30) einerseits mit dem ersten Element (50) und andererseits durch Verbindungsmittel (40-46; 52-58) mit festen Verankerungszonen (34, 36) verbunden ist, so dass die Vibrationsbewegung des ersten Elements in der Richtung Oy auf das zweite Element übertragen werden kann, ohne eine Bewegung des zweiten Elements in der Richtung Ox zuzulassen, wobei eine Anregungsstruktur (70) mit dem ersten mobilen Element (50) assoziiert ist, um eine Vibration des ersten Elements entlang Ox anzuregen, und eine Bewegungserkennungsstruktur (90) mit dem zweiten mobilen Element (30) assoziiert ist, um eine Vibration des zweiten Elementes entlang Oy zu erkennen, wobei das erste mobile Element (50) ein das zweite mobile Element umgebender rechteckiger Zwischenrahmen ist, mobile Masse (30) genannt, und die Kopplungsstruktur zwei externe Rahmen (20) umfasst, die jeweils den Zwischenrahmen einer jeweiligen mobilen Baugruppe umgeben.

2. Gyroskop nach Anspruch 1, **dadurch gekennzeichnet, dass** die mobile Masse (30) mit dem Zwischenrahmen (50) über wenigstens zwei schmale und längliche Biegearme (52-58) verbunden ist, die eine hohe Dehnungsfestigkeit in Richtung Oy und eine geringe Steifigkeit in Richtung Ox haben, und die mobile Masse mit wenigstens einer Verankerungszone über wenigstens zwei zweite schmale und längliche Biegearme verbunden ist, die eine hohe Dehnungsfestigkeit in Richtung Ox und eine geringe Steifigkeit in Richtung Oy haben.

3. Gyroskop nach Anspruch 2, **dadurch gekennzeichnet, dass** jeder erste Biegearm U-förmig gefaltet ist und zwei in Richtung Oy verlaufende längliche Abschnitte hat, wobei die beiden Abschnitte durch ein kurzes Verbindungselement miteinander verbunden sind.

4. Gyroskop nach Anspruch 3, **dadurch gekennzeichnet, dass** das kurze Verbindungselement eines der ersten Arme (52) mit einem ähnlichen Verbindungselement eines anderen ersten Arms (54) durch ein in Richtung Ox langgestrecktes Querelement (60) verbunden ist.

5. Gyroskop nach einem der Ansprüche 1 bis 4, **dadurch gekennzeichnet, dass** die Kopplungsstruktur (20, 20', 22) mit dem ersten mobilen Element jeder Baugruppe durch kurze starre Glieder (64, 66) verbunden ist.

6. Gyroskop nach einem der Ansprüche 1 bis 5, **dadurch gekennzeichnet, dass** die Kopplungsstruktur um jede mobile Baugruppe einen Außenrahmen (20, 20') und einen kurzen Verbindungsstab (22) zwischen den Außenrahmen umfasst.

7. Gyroskop nach einem der Ansprüche 1 bis 6, **dadurch gekennzeichnet, dass** die Anregungsstruktur des ersten mobilen Elements ein kapazitiver Kamm mit in den dünnen flachen Wafer eingearbeiteten Interdigitalelektroden ist.

8. Gyroskop nach einem der Ansprüche 1 bis 7, **dadurch gekennzeichnet, dass** die Bewegungserkennungsstruktur des zweiten mobilen Elements ein kapazitiver Kamm mit in den dünnen flachen Wafer eingearbeiteten Interdigitalelektroden ist.

9. Gyroskop nach einem der Ansprüche 1 bis 6, **dadurch gekennzeichnet, dass** es wenigstens einen Interdigitalkamm (90) umfasst, der mit dem zweiten mobilen Element (30) jeder Baugruppe assoziiert ist, zum Erkennen von Bewegungen der Baugruppe entlang Oy, und wenigstens einen zusätzlichen Interdigitalkamm (110), der elektrisch von dem ersten getrennt ist, um durch Anlegen einer justierbaren Spannung an den zusätzlichen Kamm eine verstellbare Kraft auf das zweite mobile Element auszuüben, so dass die natürliche Resonanzfrequenz der mobilen Baugruppe modifiziert werden kann.

10. Gyroskop nach einem der Ansprüche 1 bis 6, **dadurch gekennzeichnet, dass** es wenigstens einen mit dem zweiten mobilen Element (30) jeder Baugruppe assoziierten Interdigitalkamm (90) zum Erkennen von Bewegungen der Baugruppe entlang Oy und wenigstens einen zusätzlichen, mit dem zweiten mobilen Element (30) jeder Baugruppe assoziierten Interdigitalkamm (130, 140) zum Ausüben, durch Anlegen einer justierbaren Spannung an den zusätzlichen Kamm, eines justierbaren Verdrehmoments an dem zweiten mobilen Element um eine Achse Oz lotrecht zu Ox und Oy umfasst.

11. Gyroskop nach einem der Ansprüche 1 bis 6, **dadurch gekennzeichnet, dass** es wenigstens drei mit dem zweiten mobilen Element assoziierte Interdigitalkämme umfasst, einen ersten (90, 100) zum Erkennen von Bewegungen der zweiten mobilen Baugruppe entlang Oy, einen zweiten (110, 120) zum Einstellen der Erkennungsfrequenz und einen dritten (130, 140) zum Ausüben eines justierbaren Torsionsmoments auf das zweite mobile Element.
